# EUROPÄISCHE PATENTANMELDUNG

(11) **EP 4 800 658 A1**
(43) Veröffentlichungstag der Anmeldung: **02.09.2026**
(21) Anmeldenummer: 25160171.2
(22) Anmeldetag: 26.02.2025
(51) Int. Cl.: G06V 10/74, G06Q 10/08, G06V 20/52, G06V 10/82

(54) **VERFAHREN ZUR BESTIMMUNG EINES ZUSTANDS EINES STÜCKGUTHANDHABUNGSSYSTEMS, UND ZUSTANDSBESTIMMUNGSSYSTEM**

(71) Anmelder: Körber Supply Chain Logistics GmbH, 78467 Konstanz (DE)
(72) Erfinder: Fischer, Marco, 78467 Konstanz (DE); Huber, Richard, 78467 Konstanz (DE); Eisser, Dirk-Udo, 78479 Reichenau (DE); Schulze, Oliver, 88662 Überlingen (DE); Skrdlant, Rolf-Peter, 88662 Überlingen (DE)
(74) Vertreter: Müller Schupfner & Partner Patent- und Rechtsanwaltspartnerschaft mbB (Muc)

(57) **Zusammenfassung**

Verfahren (1000) zur Bestimmung eines Zustandes eines Stückguthandhabungssystems (100), umfassend die Schritte: Erfassen und/oder Bestimmen (310) von Bildinformationen eines Handhabungsbereichs (200) des Stückguthandhabungssystems (100), Empfangen und/oder Abrufen (320) von Referenzbildinformationen aus einer Referenzdatenbank und Ermitteln (330) eines Zustandswerts basierend auf den Bildinformationen und den Referenzbildinformationen.

## Beschreibung

Die vorliegenden Offenbarung betrifft ein Verfahren zur Bestimmung eines Zustandes eines Stückguthandhabungssystems, , ein Computerprogramm, und ein Zustandsbestimmungssystem zum Bestimmen eines Zustandes eines Stückguthandhabungssystems zum Handhaben von Stückgütern.

Gegenwärtige Stückguthandhabungssysteme sind dazu eingerichtet, Stückgüter zu erkennen und zu sortieren. Dabei wird ein Zustand des Stückguthandhabungssystems in zwei Kategorien unterteilt. Gemäß einer ersten Kategorie wird der Zustand des Stückguthandhabungssystem als in Ordnung bewertet. In dieser ersten Kategorie wird das Verfahren welches das Stückguthandhabungssystem aktuelle ausführt, weiterhin unverändert ausgeführt und das Stückguthandhabungssystem handhabt die entsprechenden Stückgüter. In der zweiten Kategorie wird der aktuelle Zustand des Stückguthandhabungssystems als nicht in Ordnung angesehen. Wird der Zustand als zur zweiten Kategorie zugehörig erkannt, kommt es zu einem kompletten Stillstand des Stückguthandhabungssystems. Die Stückgüter werden nicht weiter gehandhabt. Das Stückguthandhabungssystem gibt ein Warnsignal an einen Nutzer aus. Erst durch ein Quittieren des Zustandes des Stückguthandhabungssystems durch den Nutzer nimmt das Stückguthandhabungssystem seinen regulären Betrieb wieder auf. Im gegenwärtigen Stand der Technik wird ein Zustand des Stückguthandhabungssystems zur zweiten Kategorie zugerechnet, wenn beispielsweise ein fremdes Objekt, welches kein Stückgut ist, in einem Handhabungsbereich des Stückguthandhabungssystems vorliegt. Zu solchen Objekten die einen Stückguthandhabungssystem in einen zweiten Zustand versetzen, also zu einem Abbruch des Ablaufs durch das Stückguthandhabungssystem führen, zählen verschiedene Objekte, darunter auch Hände von Nutzern, die auch in den Sichtbereich kommen, ohne tatsächlich eine Gefahr für den Ablauf des Stückguthandhabungssystems darzustellen. In der Konsequenz sind aktuell Stückguthandhabungssysteme störanfällig und es kommt zu häufigen Abbrüchen der regulären Abläufe des Stückguthandhabungssystems. Da dieser Abbruch des Stückguthandhabungssystems nur durch den Nutzer quittiert werden kann, bedarf es einer großen Anzahl an Nutzern, die physisch vor Ort sind um die Quittierung in den Stückguthandhabungssystem durchzuführen und den laufenden Betrieb eines Stückguthandhabungssystem aufrechtzuerhalten.

Daher ist es eine Aufgabe der vorliegenden des Gegenstands der vorliegenden Offenbarung, ein Verfahren bereitzustellen, welches eine Bestimmung eines Zustands eines Stückguthandhabungssystems erlaubt, welches die Anzahl an Abbrüchen im laufenden Betrieb des Stückguthandhabungssystems mindert.

Der Gegenstand der der vorliegenden Offenbarung löst dieses Problem mit einem Verfahren zur Bestimmung eines Zustandes eines Stückguthandhabungssystems mit den Merkmalen des Anspruchs 1, mit einem Computerprogramm mit den Merkmalen des Anspruchs 14 und mit einem Zustandsbestimmungssystem mit den Merkmalen des Anspruchs 15.

Gemäß einem Aspekt der vorliegenden Offenbarung, wird ein Verfahren zum Bestimmen eines Zustandes eines Stückguthandhabungssystems bereitgestellt. Insbesondere umfasst das Verfahren ein Erfassen und/oder Bestimmen von Bildinformationen eines Handhabungsbereichs des Stückguthandhabungssystems. Insbesondere umfasst das Verfahren ein Empfangen und/oder Abrufen von der Referenzbildinformation aus einer Referenzdatenbank. Insbesondere umfasst das Verfahren ein Ermitteln eines Zustandswerts basierend auf den Bildinformationen und den Referenzbildinformationen. Insbesondere umfasst der Handhabungsbereich den Bereich in welchem das Stückguthandhabungssystem eingerichtet ist, ein Stückgut zu manipulieren. Insbesondere umfasst das Manipulieren ein Verändern der Position eines Stückgutes und/oder eine Änderung der Bewegungstrajektorie eines Stückgutes.

Gegenüber dem bekannten Stand der Technik liefert der Gegenstand der vorliegenden Offenbarung den Vorteil, dass durch die Ermittlung eines Zustandswerts und der Berücksichtigung der Bildinformationen und der Referenzbildinformation eine Vielzahl unterschiedlicher Zustandswerte ermittelt werden können. Die Vielzahl der unterschiedlichen Zustandswerte können zu unterschiedlichen Handlungen des Stückguthandhabungssystems führen. So muss es nicht zwingend jedes Mal zum Abbruch des aktuellen Vorgangs des Stückguthandhabungssystems kommen, weil sich ein fremdes Objekt, welches kein Stückgut ist, in seinem Handhabungsbereich befindet. Stattdessen kann das Stückguthandhabungssystem zum Beispiel seine Fahrt verlangsamen oder seine Planungstrajektorie abändern, um dem Störobjekt auszuweichen, oder eventuellen Einflüssen des Störobjektes auf das Stückguthandhabungssystem oder das Stückgut selbst zu verhindern. Ferner kann eine Störung auch erst bei einer Kombination von mehreren Ereignissen auftreten. Somit können Ereignisse besser eingeschätzt werden und bestimmt werden, ob eine Unterbrechung des Betriebs der Handhabungssystems tatsächlich notwendig ist, oder ob andere Maßnahmen ausreichen. Dadurch kann eine frühzeitige Erkennung von Störungssituationen erfolgen. Ferne kann eine Gefährdung von Mensch und Material vermieden werden. Durch Verwendung von Bildinformationen können völlig neue und unerwartete Störungssituationen erkannt werden. eine Störung kann vorliegen aufgrund eines menschlichen Eingriffs in das System (Hände, Körperteile im Bild), Verklemmungen (z.B. von Stückgütern), übergroße Stückgüter, extreme Durchsatz-Spitzen, Fremdobjekte, die den Betrieb gefährden können, Verschmutzungen auf dem Förderelement, Verschmutzungen eines Vision-Systems (z.B. Kamera), und/oder Ausfall einer Beleuchtung.

Das Stückguthandhabungssystem kann eine Vorrichtung sein, die dazu ausgestaltet ist, Stückgüter zu handhaben. Handhaben kann in diesem Zusammenhang bedeuten, dass ein Stückgut physisch im Raum verlagern wird, dass eine Orientierung des Stückguts geändert wird und/oder dass eine Bewegung des Stückguts beschleunigt, verlangsamt, gestoppt oder initiiert wird. Das Stückguthandhabungssystem kann ein Roboter umfassen. Ferner kann das Stückguthandhabungssystem auch eine Fördereinrichtung oder jedes andere System sein, bei dem Bildinformationen vorliegen. Das Stückgut kann eine Postsendung sein. Insbesondere kann das Stückgut ein Paket, Päckchen, Polybag, Transporttasche, Versandrolle, Brief oder dergleichen sein. Der Schritt des Abrufens kann zeitlich nach dem ersten Schritt erfolgen. Der Schritt des Ermittelns kann nach dem Schritt des Abrufens erfolgen. Insbesondere gibt der Zustandswert einen Zustand des Stückguthandhabungssystems wieder. Insbesondere kann das Stückguthandhabungssystem einen steuerbaren Roboterarm umfassen. Insbesondere kann ein Stückguthandhabungssystem einen Sensor zur Erfassung einer Umgebung, insbesondere eines Handhabungsbereichs, um das Stückguthandhabungssystem zu erfassen. Insbesondere kann das Stückguthandhabungssystem eine Steuereinheit umfassen. Insbesondere kann das Stückguthandhabungssystem eine Bedieneinheit umfassen. Insbesondere kann das Stückguthandhabungssystem eine Kommunikationsschnittstelle umfassen. Insbesondere ist die Steuereinheit mit der Bedieneinheit zum Signalaustausch verbunden. Insbesondere ist die Steuereinheit mit dem Roboterarm zum Signalaustausch verbunden. Insbesondere ist die Steuereinheit mit dem Sensor zum Signalaustausch verbunden. Insbesondere ist die Steuereinheit mit der Kommunikationsschnittstelle zum Signalaustausch verbunden. Insbesondere ist der Roboterarm eingerichtet, sich zumindest in einer Raumrichtung zu bewegen. Insbesondere ist der Roboterarm eingerichtet, ein Stückgut in dem Handhabungsbereich zu manipulieren. Insbesondere umfasst das Manipulieren eine Verändern Position eines Stückgutes und/oder eine Änderung der Bewegungstrajektorie des Stückgutes.

Insbesondere ist die Kommunikationsschnittstelle eingerichtet eine Verbindung zwischen der Steuereinheit und einer externen Recheneinheit zu ermöglichen. Insbesondere ist die externe Recheneinheit außerhalb des Stückguthandhabungssystems angeordnet. Insbesondere ist die Kommunikationsschnittstelle eingerichtet, kabelverbunden und/oder kabellos eine Verbindung zum Signalaustausch mit der externen Recheneinheit einzugehen. Insbesondere ist ein Handhabungsbereich ein Bereich, in welchem die Handhabungsvorrichtung ausgebildet ist, Stückgüter anzuhaben. Insbesondere umfasst ein Handhaben eines Stückgutes ein Greifen, und/oder ein Anheben und/oder ein Versetzen und/oder ein Herablassen von Stückgütern.

Insbesondere erfolgt das Bestimmen von Bildinformationen auf einem Sensor des Stückguthandhabungssystems. Insbesondere umfasst der Sensor des Stückguthandhabungssystems eine Kamera und/oder einen schallbasierten Sensor. Insbesondere umfasst der Sensor des Stückguthandhabungssystems ein Ultraschallsensor und/oder eine Lichtschranke. Insbesondere ist die Kamera eingerichtet im sichtbaren Licht zu arbeiten. Insbesondere ist die Kamera eingerichtet im Infrarotlicht zu arbeiten. Insbesondere ist die Kamera eingerichtet im Infrarotbereich, bevorzugt im nahen Infrarotbereich zu arbeiten. Insbesondere umfasst die Kamera eine Fischaugenlinse. Die Bildinformationen können als ergänzende Information zu anderen Sensordaten genutzt werden. Somit kann eine zusätzliche Absicherung bereitgestellt sein, falls andere Sicherheitssysteme (Lichtschranken, Personenschutz-Lichtgitter oder -Laserscanner, Türen, vorgelagerte Systeme...) versagen.

Insbesondere ist die Referenzdatenbank eingerichtet die Referenzbildinformationen und weitere Referenzbildinformationen aufzuweisen. Insbesondere ist die Referenzdatenbank eingerichtet die Referenzbildinformationen bereitzustellen. Insbesondere ist die Referenzdatenbank eingerichtet neue Referenzbildinformationen abzuspeichern, und/oder bereitzustellen. Insbesondere ist die Referenzdatenbank als dynamischer Speicher ausgestaltet. Insbesondere ist die Referenzdatenbank auf der Steuereinheit des Stückguthandhabungssystems hinterlegt. Insbesondere ist die Referenzdatenbank auf einer externen Recheneinheit hinterlegt. Insbesondere ist die Steuereinheit eingerichtet, über die Kommunikationsschnittstelle mit der externen Recheneinheit im Signalaustausch zu stehen und auf die Referenzdatenbank zuzugreifen. Der Zustand des Stückguthandhabungssystems kann indikativ für eine Warnstufe sein. Mit anderen Worten kann der Zustand ein Betriebszustand des Stückguthandhabungssystems sein. Beispielsweise kann der Zustand angeben, dass alles in Ordnung ist. Ferner kann der Zustand angeben, dass zwar etwas erkannt wurde (beispielsweise eine Nutzer im Detektionsbereich des Stückguthandhabungssystems) dies aber weder den Betrieb noch anderes Beeinträchtigt, weswegen der Betrieb des Stückguthandhabungssystems weitergeführt wird. Zudem kann der Zustand angeben, dass der Betrieb des Stückguthandhabungssystems unterbrochen werden muss. Dieser Zustand kann beispielsweise auch dann vorliegen, wenn ein Gegenstand oder eine Person sich in Richtung des Handhabungsbereichs bewegt und dort für Probleme sorgen wird. Mit anderen Worten kann bereits in Vorbereitung auf einen eintretenden Zustand das Stückguthandhabungssystem entsprechend gesteuert werden. Damit kann die Sicherheit sogar noch erhöht werden. Die Bildinformationen können Bilddaten sein. Die Bildinformationen können einen Bereich um das Stückguthandhabungssystem herum, insbesondere eines Handhabungsbereichs des Stückguthandhabungssystems, umfassen. Die Bildinformationen können Merkmale umfassen. Merkmale können bestimmte Dinge sein, die von Interesse sind. So kann beispielsweise ein unbewegter Teil des Stückguthandhabungssystems nicht in den Bildinformationen umfasst sein. Somit kann die Größe der Bildinformationen verringert werden, wodurch der Prozess beschleunigt werden kann. Somit können die Bildinformationen aus Rohbilddaten, die beispielsweise ein RGB Bild oder ein Bilddatenstrom sind, bestimmt werden. Die Referenzdatenbank kann Referenzbildinformationen umfassen. Die Referenzbildinformationen können Merkmale sein, die in der Vergangenheit in Zusammenhang mit dem Stückguthandhabungssystem vorgekommen sind. Beispielsweise können die Referenzbildinformationen als Merkmal ein Körperteil eines Nutzers in dem Handhabungsbereich umfassen. Durch das Abrufen der Referenzbildinformationen kann ein erfasster Gegenstand (z.B. Merkmal in den Bildinformationen) identifiziert werden. Zudem können die Referenzbildinformationen weitere Informationen umfassen wie beispielsweise Informationen über vergangene Ereignisse, als ein bestimmtes Merkmal schonmal aufgetreten ist. Somit können bei dem Schritt des Ermittelns weitere Informationen berücksichtigt werden. Bei dem Ermitteln des Zustandswerts können dann die Referenzbildinformationen zusammen mit den Bildinformationen genutzt werden, um einen Zustandswert zu bestimmen. Die Bildinformationen können noch Metadaten wie Uhrzeit, Datum, Maschinenstrom, Position des Stückguts und/oder anderer Merkmale, oder andere Messwert des Stückguthandhabungssystems umfassen. Durch die Information, die von der Referenzdatenbank abgerufen wird, kann die Bildinformation also bewertet werden. Damit kann ein genauer Zustandswert bestimmt werden. Bei der Ermittlung des Zustandswerts werden als Eingangsinformationen die Bildinformationen und die Referenzbildinformationen genutzt. Damit kann ein lebensnaher Zustandswert bestimmt werden. Ferner kann das Verfahren ein Vergleichen von allen Referenzbildinformationen in der Referenzdatenbank mit den Bildinformationen umfassen, um die passenden Referenzbildinformationen zu bestimmen. Hierbei können einzelne Merkmale aus den Bildinformationen zugrunde gelegt werden. Damit kann genau die passenden Referenzbildinformationen aufgefunden werden, die zu den Bildinformationen passen. Es können auch mehrere Referenzbildinformationen zu einer Bildinformation passen. Damit kann ein Lerneffekt bereitgestellt werden. Mit anderen Worten kann das bedeuten, dass, umso mehr Referenzbildinformationen vorhanden sind, desto besser kann der Zustandswert bestimmt werden. Insgesamt kann mit dem Zustandswert also ein Wert geschaffen werden, der Situationsgenau angibt inwieweit bestimmte Vorkommnisse im Umkreis des Stückguthandhabungssystems auf den Betrieb des Stückguthandhabungssystems einwirken kann oder nicht. Darauf basierend können dann Maßnahmen ergriffen werden, um in den Betrieb des Stückguthandhabungssystems einzugreifen.

Optional umfassen die Bildinformationen Stückgutinformationen, welche indikativ für Eigenschaften eines Stückguts sind. Stückgutinformationen können Form, Gewicht, Oberflächenbeschaffenheit, Absender, Empfänger oder des Gleichen umfassen. Somit kann der Zustand von Stückgütern bei den Bildinformationen und bei der Ermittlung eines Zustandswerts berücksichtigt werden kann.

Optional ist ein Stückgut ein Objekt, dass von dem Stückguthandhabungssystem als handzuhabendes Objekt anzusehen ist. Somit können unter Stückgütern Güter verstanden werden, die auch tatsächlich von dem Stückguthandhabungssystem gehandhabt werden. Ferner können nur relevante Objekte für die Ermittlung eines Zustandswerts des Zustands des Stückguthandhabungssystems berücksichtigt werden.

Optional umfassen die Bildinformationen Fremdobjektinformationen, welche Informationen über ein Fremdobjekt aufweisen. Damit kann zur Ermittlung eines Zustandswerts des Stückguthandhabungssystems Fremdobjektinformationen, welche Informationen über Objekte umfassen können, die den Betrieb des Stückguthandhabungssystems stören könnten, berücksichtigt werden. Ferner kann ein präziserer Zustandswert des Stückguthandhabungssystems ermittelt werden kann.

Optional ist ein Fremdobjekt ein Objekt, das sich in dem Handhabungsbereich des Stückguthandhabungssystems befindet. Mit anderen Worten kann das Fremdobjekt ein Objekt sein, welches normalerweise nicht in dem Handhabungsbereich des Stückguthandhabungssystems vorzufinden ist. Somit können nur die Objekte berücksichtigt werden, die normalerweise nicht im Handhabungsbereich des Stückguthandhabungssystems vorzufinden sind. Dadurch kann die Datenmenge reduziert sein. Optional weisen die Referenzbildinformationen Informationen über ein Stückgut auf. Optional weisen die Referenzbildinformationen Informationen über ein Fremdobjekt auf.

Optional umfasst das Ermitteln ein Vergleichen von Merkmalen aus den Bildinformationen und den Referenzbildinformationen. Damit können nur bestimmte Bereiche der Bildinformationen und der Referenzbildinformationen verglichen werden. Beispielsweise ist denkbar, dass lediglich eine relative Position der Stückgüter zueinander verglichen wird. Mit anderen Worten können nur bestimmte Eigenschaften der Bildinformationen und der Referenzbildinformationen verglichen werden. Dadurch kann der Bearbeitungsschritt des Ermittelns beschleunigt werden, da nur bestimmte Eigenschaften verglichen werden. Hierbei können die Eigenschaften genutzt werden kritisch sind hinsichtlich der Störanfälligkeit. Beispielsweise kommen als Eigenschaften Stückgutgröße, Stückgutposition relativ zu einander, Stückgutposition relativ zu Elementen des Stückguthandhabungssystems, Bewegungsgeschwindigkeit usw. in Frage.

Optional umfasst die Referenzdatenbank reduzierte Referenzbildinformationen. Mit anderen Worten können die Referenzbildinformationen in der Referenzdatenbank nur einen Bereich von Interesse umfassen. Somit kann Speicherplatz eingespart werden und die Zugriffszeiten beschleunigt werden. Zudem ist denkbar, dass die Referenzbildinformationen nur Eigenschaften aufweisen, die mit den Bildinformationen verglichen werden (vergleiche auch das Obige). Damit kann der Speicherplatz weiter reduziert werden.

Optional umfasst das Ermitteln des Zustandswerts ein Abgleichen zwischen Bildinformationen und Referenzbildinformationen, um einen Grad einer Abweichung von Bildinformationen zu Referenzbildinformationen zu bestimmen und basierend darauf den Zustandswert zu ermitteln. Mit anderen Worten kann durch den Abgleich eine Wahrscheinlichkeit errechnet werden, ob sich die gezeigte Szene (die in den Bildinformationen umfasst ist) innerhalb einer üblichen Variation befindet oder aber eine außergewöhnliche Situation vorliegen kann, charakterisiert durch sehr hohe Abweichungen, insbesondere von Bild-Eigenschaften. Unter einer üblichen Variation kann verstanden werden, dass eine Abweichung von den Bildinformationen zu den Referenzbildinformationen in einem akzeptablen Bereich liegt, in welchem mit erhöhter Wahrscheinlichkeit keine Störung auftritt. Der akzeptablen Bereich kann basierend auf Erfahrungswerte einstellbar sein. Ferner können auch mehrere Bereich definiert werden, bei denen individuelle Informationen ausgegeben werden können, um beispielsweise einen Nutzer zu warnen. Vergleiche hierzu auch weiter unten die Referenzklassen.

Das Ermitteln kann mithilfe eines lernenden Algorithmus durchgeführt werden. Hierbei können Referenzbilder unterschiedlicher Zustände genutzt werden, um den lernenden Algorithmus so zu trainieren, dass jeder Zustand auf eine Position in einem Vektorraum abgebildet wird, in dem ähnliche Zustände in einer zu definierenden Metrik nah beieinander liegen. Neu zu klassifizierende Bilder können ebenfalls auf einen Punkt im Vektorraum abgebildet werden und es kann durch Nähe zu bekannten Zuständen ermittelt werden, ob es sich um einen der bekannten Zustand handelt oder ob es sich um eine ganz neue, unbekannte Klasse handeln könnte. Somit kann der lernende Algorithmus weitergebildet werden, um auch neue Zustände zu erlernen. In diesem Fall kann der Zustand von Menschen klassifiziert werden, damit dann im nächsten Training der Abstand zu bekannten Zuständen minimiert oder maximiert werden muss, je nachdem ob der Zustand einer bereits bekannten Klasse zuzuordnen ist, oder ob eine neue Klasse eröffnet werden soll.

Optional wird das Ermitteln des Zustandswerts durch einen lernende Algorithmus durchgeführt. Der lernende Algorithmus kann somit die Bildinformationen als Eingangsinformation aufweisen und den Zustandswert als Ausgabe. Der lernende Algorithmus kann darauf trainiert sein, basierend auf Bildinformationen auszugeben, welcher Zustand vorliegt. Dieser Zustand kann dann in Form des Zustandswerts ausgegeben werden. Somit kann der lernende Algorithmus darauf trainiert sein, Zustände basierend auf Bildinformationen zu erkennen. Der lernende Algorithmus kann ein neuronales Netz sein. Bei einem Trainieren des lernenden Algorithmus können Variablen angepasst werden. Somit kann nach einem Training, lediglich basierend auf den Bildinformationen und den Variablen des lernenden Algorithmus bestimmt werden, welcher Zustand vorliegt. Somit können beispielsweise bekannte Anomalien gelernt werden. Beispielsweise kann eine Anomalie sein, dass eine Beleuchtung ausfällt. Darauf basierend kann also der Zustandswert bestimmt werden und die Wichtigkeit bzw. die Folgen einer erkannten Anomalie bestimmt werden. Dadurch kann ein Verfahren bereitgestellt werden, das sich an wechselnde Randbedingungen anpassen kann.

Beispielswiese kann bei Auftreten einer Störung oder Anomalie, diese von einem Nutzer quittiert werden. Dadurch kann dem lernenden Algorithmus eine Information zur Verfügung gestellt werden, welche Ausgangssituation zu der Störung geführt hat. Dadurch kann der lernende Algorithmus sich weiterentwickeln. Mit anderen Worten kann der lernende Algorithmus mit diesen Informationen trainiert sein ohne dass eine eindeutige Zuordnung der gesicherten Daten (Referenzbildinformationen) zu einzelnen Bildern (Bildinformationen) erkennbar ist. Beispielsweise kann das Handhabungssystem erst nach Quittierung durch einen Nutzer seine Arbeit fortführen, nachdem es durch eine Störung gestoppt wurde. Zur Quittierung kann eine Klassifikation des Ereignisses (d.h. der Störung) eingegeben werden um für künftige vergleichbare Ereignisse Handlungsempfehlungen oder verschiedene Eskalationsstufen an die Steuerung übermitteln zu können. Somit kann der lernende Algorithmus weiter trainiert werden. Bildinformationen und Quittierungsinformationen (z.B. als Referenzbildinformationen) können zentral gesammelt werden und verschiedenen Handhabungssystemen zur Verfügung gestellt werden. Dadurch kann ein lernender Algorithmus selbst bei neuen Anlagen eingesetzt werden.

Optional wird das Stückguthandhabungssystem basierend auf den Bildinformationen gesteuert. Mit anderen Worten werden die Bildinformationen zur Steuerung des Stückguthandhabungssystems verwendet und nicht ausschließlich zur Störungserkennung genutzt. Somit können Bildinformationen, die sowieso vorliegen, genutzt werden um eine weitere Funktionalität bereitzustellen. Es ist somit keine zusätzliche Kamera-Technik erforderlich, sondern ohnehin verarbeitete Bilder können auf weitere Merkmale untersucht werden.

Optional werden die Bildinformationen aus einem Rohbilddatenstrom generiert, wobei für die Bildinformationen nur jedes n-te Bild verwendet wird. Beispielsweise kann jedes 2 bis jedes 30 Bild verwendet werden. Mit anderen Worten kann nicht jedes aufgenommene Bild in den Bildinformationen berücksichtigt werden. Dadurch kann die Datenmenge reduziert werden, ohne dass wesentliche Informationen verloren gehen. Die Zahl, die für die Variable n gewählt wird, kann abhängig sein, von der Geschwindigkeit, in der Stückgüter gehanhabt werden. Werden die Stückgüter mit einer hohen Geschwindigkeit gehandhabt, kann ein niedriger Wert für n gewählt werden. Somit kann nur jedes n-te Bild untersucht werden um Rechenzeit zu sparen. Ferner können auch Untersuchung mehrerer aufeinanderfolgender Bilder angewandt werden, um dynamische Störfälle festzustellen, z.B. Förderelement bewegt sich, Stückgüter darauf aber nicht. Somit kann eine zuverlässige Bestimmung des Zustandswerts bereitgestellt sein. Ferner kann auch eine zeitliche Berücksichtigung der Bildinformation herangezogen werden. So kann beispielsweise in einem bestimmten Zeitintervall eine Bildinformation aus dem Rohbilddatenstrom erzeugt werden. Denkbar ist hierbei, dass jede Minute eine Bildinformation entnommen wird. Ferner sind auch andere Zeitintervalle denkbar, abhängig von der Auflösung des Rohbilddatenstroms. Generell ist ein Zeitintervall von einigen Sekunden bis hin zu mehren Stunden denkbar. Darüber hinaus kann eine Bildinformation auch basierend auf anderen Parameter aus dem Rohbilddatenstrom entnommen werden. Beispielsweise kann eine Bilddateninformation alle 100m geförderte Bandstrecke (einer Fördervorrichtung) entnommen werden. Dadurch kann abhängig einer Fördergeschwindigkeit eine Handhabungsvorrichtung überwacht werden. Denkbar sind hier auch Werte von 1m bis 1000m, abhängig von der Dichte der Belegung der Fördervorrichtung.

Optional bleibt beim Bestimmen der Bildinformationen ein Teil des Bildes und/oder ein Teil einer Bilderserie unberücksichtigt. Somit können die Bildinforationen auf die wesentlichen Informationen, die zur Ermittlung eines Zustandswerts benötigt werden, reduziert werden. Ferner kann eine zu verarbeitende Datenmenge reduziert werden. Folglich kann eine Verarbeitungsgeschwindigkeit erhöht sein. Somit verringert sich auch die Dauer zur Ermittlung des Zustandswertes.

Optional basiert das Bestimmen der Bildinformationen auf Sensordaten des Sensors des Stückguthandhabungssystems. Mit anderen Worten können die Bildinformationen von zumindest einem Sensor des Stückguthandhabungssystems bestimmt werden. Mit anderen Worten kann ein Sensor des Stückguthandhabungssystems verwendet werden. Daher kann ein sowieso vorhandener Sensor (der z.B. zur Steuerung des Stückguthandhabungssystems genutzt wird) auch für die Bestimmung der Bildinformationen genutzt werden. Somit muss kein weiterer Sensor zur Durchführung des Verfahrens am Stückguthandhabungssystem vorgesehen werden.

Optional umfasst das Bestimmen der Bildinformationen ein Auswählen eines Bereichs von Interesse. Insbesondere können die Bildinformationen auf diesen Bereich von Interesse beschränkt werden. Die übrigen Informationen können weggelassen werden, so dass diese bei der Bestimmung der Bildinformationen nicht berücksichtigt werden. Damit kann die Datenmenge gesenkt werden. Dies erlaubt eine schnellere Bearbeitung der Bildinformationen.

Optional umfasst ein Bereich von Interesse das Stückgut. Somit kann die zu bearbeitende Datenrate reduziert und zugleich ein zu handhabendes Stückgut bei der Ermittlung des Zustandswerts berücksichtigt werden. Die steigert die Zuverlässigkeit der Ermittlung des Zustandswerts als Indikator für einen tatsächlichen Zustand des Systems.

Optional weist das Stückguthandhabungssystems ein Fördermittel auf. Ein Fördermittel kann ein Förderband, Rollenförderer oder eine andere Fördervorrichtung sein. Die Stückgüter kann also zu dem Stückguthandhabungssystem befördert werden.

Optional umfasst der Bereich von Interesse zumindest einen Abschnitt des Fördermittels. Folglich kann der Zustandswert indikativ für einen Zustand des Stückguthandhabungssystems sowie aller wesentlicher, angeschlossener Elemente sein. Da das Fördermittel bewirkt, dass sich die Stückgüter bewegen, können aus einer zusätzlichen Betrachtung des Fördermittels weitere Rückschlüsse gezogen werden.

Optional umfasst der Bereich von Interesse einen Zwischenspeicher. Beim Zwischenspeicher kann es sich um einen Bereich handeln, in welchem ein Stückgut zwischengespeichert, insbesondere momentan nicht befördert, wird. Optional ist der Zwischenspeicher als Ablagefläche, insbesondere für das Stückgut, ausgebildet.

Optional umfasst die Bildinformation eine Bildserie. Somit können mehr Informationen über dasselbe Stückgut erreicht werden kann. Ferner kann somit eine Änderung von Randbedingungen oder Merkmalen berücksichtigt werden.

Optional wird das Bild und/oder die Bildserie mittels des Sensors des Stückguthandhabungssystems ermittelt. Folglich muss kein zusätzlicher Sensor für das Verfahren vorgesehen werden muss. Stattdessen kann der Sensor des Stückguthandhabungssystems verwendet werden welcher ohnehin für den Betrieb des Stückguthandhabungssystems vorgesehen ist. Dies senkt einen Herstellungsaufwand für ein Stückguthandhabungssystem, welches geeignet wäre um dieses Verfahren auszuführen.

Optional weist die Bildserie ein erstes Bild, welches zu einem ersten Zeitpunkt aufgenommen wurde, und ein zweites Bild, welches zu einem zum ersten Zeitpunkt unterschiedlichen zweiten Zeitpunkt aufgenommen wurde, umfasst. Somit kann durch eine Auswertung des ersten Bildes und des zweiten Bildes mehr Informationen gewonnen werden, als allein aus dem ersten Bild oder dem zweiten Bild. Mit anderen Worten kann die Bildserie als Video ausgestaltet sein. Damit kann eine Auswertung, insbesondere eine nachträgliche Auswertung, der Bildserie durch einen Nutzer vereinfacht sein. Ferner kann eine dynamische Eigenschaft eines Stückgutes und/oder Objekts aus dem ersten Bild und dem zweiten Bild entnommen werden kann. Somit kann eine präzisere Bestimmung des Zustandswertes als Indikator für einen tatsächlichen Zustand des Stückguthandhabungssystems erreicht werden.

Optional umfasst das Bestimmen der Bildinformationen, eine Bestimmung eines Bewegungsvektors, insbesondere basierend auf der Bilderserie, eines Stückgutes. Mittels der Bestimmung des Bewegungsvektors kann eine Bewegungstrajektorie eines Stückgutes entlang eines Fördermittels und/oder während der Handhabung durch das Stückguthandhabungssystems erlangt werden. Damit kann ein zukünftiger Weg bestimmt werden, den das Stückgut und/oder das Objekt nehmen wird. Folglich können beispielsweise etwaige Kollisionen vorbestimmt werden.

Optional bleibt beim Ermitteln des Zustandswerts Teil des Bildes oder ein Teil der Bilderserie unberücksichtigt. Mit anderen Worten kann nur ein Teil der zur Verfügung stehenden Bilddaten genutzt werden. Beispielsweise kann nur jedes 2 Bild verwendet werden. Es ist aber auch denkbar, dass nur jedes 5. Bild verwendet wird. Damit kann die Datenmenge erheblich reduziert werden. Folglich kann die Effizienz des Verfahrens zur Ermittlung des Zustandswerts erhöht werden.

Optional wird beim Bestimmen der Bildinformationen eine Position eines Stückgutes ermittelt. Insbesondere umfasst eine Referenzbildinformation eine Position eines Stückgutes. Damit kann auch eine mögliche zukünftige Position des Stückguts berechnet werden. Optional wird beim Ermitteln des Zustandswerts die Position eines Stückgutes berücksichtigt. Analog dazu kann bei dem Bestimmen der Bildinformationen eine Position eines Fremdobjekts ermittelt werden. Beispielsweise kann eine Referenzbildinformationen eine Position eines Fremdobjekts und/oder Stückguts umfassen. Damit kann ein Anhaltspunkt geschaffen werden, was abhängig von einer Position eines Objekts in der weiteren Folge passiert. Beispielsweise kann ein Stückgut, welches sehr nah am Rand eines Fördermittels ist, im weiteren Verlauf von dem Fördermittel herunterfallen. Optional wird beim Ermitteln des Zustandswerts die Position eines Fremdobjekts berücksichtigt.

Optional wird beim Bestimmen der Bildinformation ein Abstand eines Fremdobjekts zu einem Stückgut ermittelt. Durch den Abstand kann auf mögliche Probleme oder Gefahren zurückgeschlossen werden. Insbesondere umfasst eine Referenzbildinformation einen Abstand eines Fremdobjekts zu einem Stückgut. Somit ist eine einfache Zuordnung von Bildinformationen zu Referenzbildinformationen möglich. Somit kann ein präziserer Zustandswert ermittelt werden kann. Bei dem Ermitteln des Zustandswerts kann der Abstand eines Fremdobjekts zu einem Stückgut berücksichtigt werden. Ferner kann bei dem Ermitteln des Zustandswerts der Abstand eines Fremdobjekts und/oder des Stückguts zu dem Stückguthandhabungssystem berücksichtigt werden.

Optional ist der Zustandswert ein Wahrscheinlichkeitswert. Insbesondere ist der Wahrscheinlichkeitswert indikativ für eine Wahrscheinlich, mit welcher es, insbesondere durch ein Fremdobjekt, zu einer Störung im Ablauf eines Betriebs des Stückguthandhabungssystems kommen kann. Somit kann eine Wahrscheinlichkeit angegeben werden, wie wahrscheinlich es ist, dass es in der Zukunft zu Problemen oder Defekten bei dem Stückguthandhabungssystem kommt. Durch die Angabe von Wahrscheinlichkeiten kann eine Unterteilung vorgenommen werden, wie wahrscheinlich es ist, dass es zu Problemen kommt. Eine Störung kann ein Fehlbetrieb des Handhabungssystems sein. Beispielweise liegt eine Störung vor, wenn ein Stückgut ungewollt mit dem Stückguthandhabungssystem kollidiert. Ferner kann eine Störung vorliegen, wenn ein Stückgut unbeabsichtigt in irgendeine Position verlagern wird (beispielsweise wenn ein Stückgut von einem Fördermittel fällt). Ferner kann eine Störung auch dann vorliegen, wenn die Stückguthandhabungssystem mit einem fremden Objekt kollidiert (beispielsweise mit einem Nutzer oder mit Teilen eines Nutzers). Bei einer Störung muss der Betrieb unterbrochen werden oder zumindest ein Nutzer manuell eingreifen. Beispielsweise umfasst die Störung durch ein Fremdobjekt ein Verursachen eines Staus von Stückgütern, insbesondere verursacht durch ein Fremdobjekt. Optional umfasst die Störung durch ein Fremdobjekt an Senkrechtstellen eines Stückgutes, insbesondere verursacht durch ein Fremdobjekt. Optional umfasst die Störung eine Beschädigung von Stückgütern, insbesondere durch ein Fremdobjekt. Optional umfasst die Störung eine Doppel- und Mehrfachbepackung von Stückgütern, insbesondere verursacht durch ein Fremdobjekt. Ferner kann die Störung ein Steckenbleiben eines Stückgutes durch ein Fremdobjekt umfassen. Optional umfasst die Störung durch ein Fremdobjekt eine Behinderung einer Bewegung des Stückguthandhabungssystems und/oder eine Beeinträchtigung des Handhabungsbereichs, insbesondere eines Abschnitts des Sichtfelds, in welchem sich ein Stückgut befindet, eines Sensors.

Optional kann der Zustandswert eine erste Zustandsausprägung, eine zweite Zustandsausprägung und eine dritte Zustandsausprägung annehmen. Insbesondere sind die erste Zustandsausprägung, die zweite Zustandsausprägung und die dritte Zustandsausprägung unterschiedlich. Folglich kann der Zustandswert in verschiedene Klassen aufgeteilt werden. Damit kann für eine Gruppe von Zustandswerten dieselbe Abhilfe bereitgestellt werden. Dadurch können Reaktionen auf eine Zustandsänderung einfacher ausgestaltet sein. Es ist hierbei denkbar ein Ampelsystem einzuführen, bei dem bis zu einem bestimmten Zustandswert, der Zustand des Stückguthandhabungssystems als Ok bezeichnet wird. Ändert sich der Zustandswert darüber hinaus, kann eine Warnung ausgegeben werden. Ändert sich der Zustandswert noch weiter, können sofortige Gegenmaßnahmen verlangt werden.

Optional wird beim Ermitteln des Zustandswerts nur ein Bereich für Interesse in den Referenzbildinformationen und/oder ein Bereich von Interesse in den Bildinformationen berücksichtigt. Insbesondere wird beim Ermitteln des Zustandswerts ein Bereich welcher nicht von Interesse ist in den Bildinformationen und den Referenzbildinformationen nicht berücksichtigt. Somit kann ein Aufwand zur Ermittlung des Zustandswerts verringert werden. Ferner bleibt eine Präzision des ermittelten Zustandswerts erhalten.

Optional umfassen die Referenzbildinformationen eine erste Referenzklasse, eine zweite Referenzklasse und eine dritte Referenzklasse. Insbesondere sind die erste Referenzklasse, die zweite Referenzklasse und die dritte Referenzklasse unterschiedlich. Insbesondere basiert die Ermittlung des Zustandswerts der ersten Referenzklasse, der zweiten Referenzklasse und der dritten Referenzklasse auf den Referenzbildinformationen. Insbesondere werden bei der Ermittlung des Zustandswerts die erste Referenzklasse und/oder die zweite Referenzklasse und/oder die dritte Referenzklasse berücksichtigt.

Optional wird beim Ermitteln des Zustandswerts, ermittelt, in welchem Verhältnis die Bildinformationen der ersten Referenzklasse und/oder der zweiten Referenzklasse und/oder der dritten Referenzklasse zuzuordnen sind. Insbesondere erfolgt die Ermittlung des Zustandswerts in Abhängigkeit von der Verteilung der Bildinformationen in der ersten Referenzklasse, in der zweiten Referenzklasse, und in der dritten Referenzklasse.

Optional umfassen die Referenzbildinformationen ein Bewertung der ersten Referenzklasse und/oder der zweiten Referenzklasse und/oder der dritten Referenzklasse. Insbesondere wird beim Ermitteln des Zustandswerts die Bewertung der ersten Referenzklasse und/oder der zweiten Referenzklasse und/oder der dritten Referenzklasse berücksichtigt.

Optional erfolgt die Ermittlung des Zustandswertes mittels eines lernenden Algorithmus. Somit können gemachte Erfahrung berücksichtigt werden. Ändert sich beispielsweise die Art der Stückgüter, kann ein lernender Algorithmus gemachte Erfahrungen sammeln und damit sich selbstständig auf neue Stückgüter einstellen. Der lernende Algorithmus kann beispielsweise beobachten welche Merkmale und/oder welche relative Beziehung der Merkmale untereinander zu Problemen führt. Damit kann eine fortlaufende Weiterentwicklung gewährleistet sein.

Optional weist das Verfahren ferner einen Schritt auf, in dem ein Ansteuern des Stückguthandhabungssystems in Abhängigkeit vom Zustandswert des Stückguthandhabungssystems erfolgt. Somit kann das Stückguthandhabungssystem auf äußere Einflüsse basierend auf dem ermittelten Zustandswert reagieren.

Optional weist das Verfahren einen Schritt auf, welcher ein Ausgeben des Zustandswerts an eine Bedieneinheit und/oder eine Kommunikationseinheit umfasst. Insbesondere weist das Verfahren in einem Schritt, ein Empfangen und/oder ein Abrufen einer Bewertung durch einen Nutzer über die Bedieneinheit und/oder die Kommunikationsschnittstelle auf. Insbesondere umfasst das Verfahren in einem Schritt ein Ausgeben der Bildinformationen der zugehörigen Bewertung an die Referenzdatenbank. Eine Bewertung eines Benutzers bezüglich eines Zustands des Stückguthandhabungssystems kann in die Referenzdatenbank eingepflegt werden kann. Ferner kann eine Bewertung des Zustands des Stückguthandhabungssystems durch den Nutzer in einer nächsten Ermittlung des Zustandswertes des Stückguthandhabungssystems berücksichtigt werden. Ferner kann eine gleiche und/oder ähnliche Bildinformationen in Folge der aufgenommenen Bewertung durch den Nutzer zu einem anderen Zustandswert führen. Optional erfolgt die Ausgabe an den Benutzer visuell und/oder haptisch und/oder auditiv. Die Ausgabe der Warnung an den Nutzer kann für den Nutzer einfach wahrnehmbar sein.

Optional ist die Bedieneinheit und/oder die Kommunikationsschnittstelle eingerichtet, Eingaben von einem Benutzer zu empfangen. Insbesondere kann eine solche Eingabe ein Quittieren einer Eingabe durch den Nutzer und/oder einer Bewertung eines Zustandswerts des Stückguthandhabungssystems umfassen. Somit kann eine einfache Eingabe durch den Nutzer ermöglicht sein. Dies senkt eine Hemmschwelle eines Nutzers eine Eingabe zu tätigen und erlaubt eine schnellere Quittierung einer Warnung durch das Stückguthandhabungssystem und/oder steigert somit die Anzahl an Bewertungen eines Zustandswerts. Letzteres kann eine Qualität des Zustandswerts als Indikator für eine Wahrscheinlichkeit mit der ein Zustand des Stückguthandhabungssystems vorliegt steigern.

Optional bleibt, wenn die erste Zustandsausprägung vorliegt, ein bisher geplanter Bewegungsablauf des Stückguthandhabungssystems unbeeinflusst. Mit anderen Worten bedeutet dies, dass Stückguthandhabungssystem eine geplante Handhabung von Stückgütern und/oder ein regulärer Betrieb des Stückguthandhabungssystems sich in Folge der Ermittlung, dass, der Zustandswert die erste Zustandsausprägung aufweist unverändert bleibt. Somit kann in einem Zustand des Stückguthandhabungssystems, welcher als unkritisch bewertet wird, ein regulärer Betrieb des Stückguthandhabungssystems aufrechterhalten bleiben. Somit kann ein manuelles Einschreiten eines Nutzers zum Weiterbetrieb des Stückguthandhabungssystems verringert sein.

Optional wird, wenn die zweite Zustandsausprägung vorliegt, ein bisher geplanter Bewegungsablauf des Stückguthandhabungssystems in geänderter Form umgesetzt. In anderen Worten bedeutet dies, dass der reguläre Ablauf um einen korrigierten Ablauf des Betriebs des Stückguthandhabungssystems angepasst wird. Somit kann ein weiteres Eingreifen eines Nutzers für den Betrieb des Stückguthandhabungssystems vermieden werden. Damit kann der Personalbedarf gesenkt werden.

Optional bleibt, wenn die dritte Zustandsausprägung vorliegt das Stückguthandhabungssystem, insbesondere unmittelbar stehen. In anderen Worten, kommt es beim Ermitteln, dass der Zustandswertets die dritte Zustandsausprägung aufweist, zu einem unmittelbaren Abbruch des regulären Betriebs des Stückguthandhabungssystems. Insbesondere wird eine Warnung an den Nutzer ausgegebene. Insbesondere erfolgt die Ausgabe der Warnung mittels der Bedieneinrichtung. Somit können kritische Zustände, die ein Sicherheitskriterium überschreiten, weiterhin zu einem Abbruch des Betriebs des Zustands des Stückguthandhabungssystems führen. Somit bleibt weiterhin die Sicherheit des Betriebs während eines Stückguthandhabungssystems aufrechterhalten.

Optional weist das Verfahren ferner einen Schritt auf, welcher ein Ausgeben einer Warnung an den Nutzer über die Bedienungseinheit und/oder die Kommunikationsschnittstelle, und wenn das Stückguthandhabungssystem stehen bleibt, umfasst. Insbesondere weist das Verfahren einen Schritt, Empfangen einer Freigabe durch den Nutzer über die Bedieneinheit und/oder die Kommunikationsschnittstelle, auf. Insbesondere weist das Verfahren einen Schritt, Wiederaufnahme der regulären Tätigkeit des Stückguthandhabungssystems bei vorliegender Freigabe durch den Nutzer, auf. Somit kann ein durch das Verfahren als kritischer bewerteter Zustand des Stückguthandhabungssystems einem Nutzer zur Bewertung vorgelegt werden. Hierdurch kann eine Sicherheit des Verfahrens erhöht werden.

Gemäß einem weiteren Aspekt der vorliegenden Offenbarung wird ein Verfahren zum Trainieren oder Umtrainieren eines lernenden Algorithmus zur Ermittlung eines Zustands eines Stückguthandhabungssystems für Stückgüter bereitgestellt. Insbesondere umfasst das Verfahren in einem Schritt ein Empfangen von Eingangstrainingsdaten, nämlich bewertete Bilder des Stückguthandhabungssystems während einer Zeitspanne, wobei die Bilder in aufsteigender Zeitfolge aufeinanderfolgend bereitgestellt werden. Insbesondere umfasst das Verfahren in einem Schritt ein Empfangen von Ausgangstrainingsdaten, nämlich einen Zustandswert des Stückguthandhabungssystems für Stückgüter während der Zeitspanne. Insbesondere umfasst das Verfahren in einem Schritt ein Trainieren oder Umtrainieren des lernenden Algorithmus basierend auf den Eingangstrainingsdaten und den Ausgangstrainingsdaten. Ein Vorteil dieser Ausführungsform kann sein, dass mittels des lernenden Algorithmus ein präziserer Zustandswerts des Stückguthandhabungssystems ermittelt werden kann. Empfangen von Ausgangs-Trainingsdaten, nämlich zumindest einen Zustandswert. Bei dem Trainieren kann es sich um ein erstmaliges Trainieren eine lernenden Algorithmus oder um ein Umtrainieren eines bestehenden lernenden Algorithmus handeln. Dabei können Variablen innerhalb des lernenden Algorithmus so angepasst werden, dass Eingangs-Trainingsdaten auf die Ausgangs-Trainingsdaten passen ("matchen"). Die Variablen können dabei die Transformation von den Eingangsdaten in die Ausgangsdaten bewirken. Sind die Variablen einmal angepasst (d.h. ist der lernende Algorithmus trainiert), kann bei Eingabe von Bildinformationen zusammen ein Zustandswerts ausgegeben werden. Ein eingesetzter lernender Algorithmus kann auch während eines Betriebs weiter trainiert werden, indem Falschausgaben als solche gekennzeichnet werden und entsprechend die Variablen des lernenden Algorithmus angepasst werden.

Gemäß einem weiteren Aspekt der vorliegenden Offenbarung wird ein Computerprogramm bereitgestellt. Das Computerprogramm umfasst insbesondere Anweisungen, die, wenn das Programm von einer Recheneinheit ausgeführt wird, die Recheneinheit veranlasst, das Verfahren gemäß einem der vorherigen Ausführungsformen auszuführen.

Die Offenbarung betrifft auch ein computerlesbares Medium, das Anweisungen enthält, die, wenn sie von einer Recheneinheit ausgeführt werden, die Recheneinheit veranlassen, das das obige Verfahren auszuführen. Ein solches computerlesbares Medium kann ein beliebiges digitales Speichermedium sein, beispielsweise eine Festplatte, ein Server, eine Cloud oder ein Computer, ein optisches oder ein magnetisches digitales Speichermedium, eine CD-ROM, eine SSD-Karte, eine SD-Karte, eine DVD oder ein USB- oder anderer Speicherstick.

Gemäß einem weiteren Aspekt der vorliegenden Offenbarung wird ein Zustandsbestimmungssystem zum Bestimmen eines Stückguthandhabungssystems zum Handhaben von Stückgütern bereitgestellt. Insbesondere umfasst das Zustandsbestimmungssystem eine Steuereinheit, welche dazu eingerichtet ist, ein Verfahren gemäß einer der vorherigen Ausführungsformen auszuführen.

Im Folgenden werden zu bevorzugende Ausführungsformen des Gegenstandes der vorliegenden Offenbarung mit Bezug auf die beigefügten Figuren beschrieben.
- **Fig. 1**: ist eine schematische Darstellung eines Stückguthandhabungssystems nach einem Ausführungsbeispiel der vorliegenden Offenbarung,
- **Fig. 2**: ist eine schematische Darstellung eines Stückguthandhabungssystems nach einem Ausführungsbeispiel der vorliegenden Offenbarung,
- **Fig. 3**: ist eine schematische Darstellung eines Stückguthandhabungssystems mit einem Zwischenspeicher nach einem Ausführungsbeispiel der vorliegenden Offenbarung,
- **Fig. 4**: ist ein schematisches Ablaufdiagramm eines Verfahrens gemäß einem Ausführungsbeispiel der vorliegenden Offenbarung,
- **Fig. 5**: ist ein schematisches Ablaufdiagramm eines Verfahrens nach einem Ausführungsbeispiel der vorliegenden Offenbarung,
- **Fig. 6**: ist ein schematisches Ablaufdiagramm eines Verfahrens nach einem Ausführungsbeispiel der vorliegenden Offenbarung,
- **Fig. 7**: ist eine schematische Darstellung eines Verfahrens eines Verfahrens nach einem Ausführungsbeispiel der vorliegenden Offenbarung, und
- **Fig. 8**: ist ein schematisches Verfahren zum Trainieren oder Umtrainieren eines lernenden Algorithmus nach einem Beispiel der vorliegenden Offenbarung.

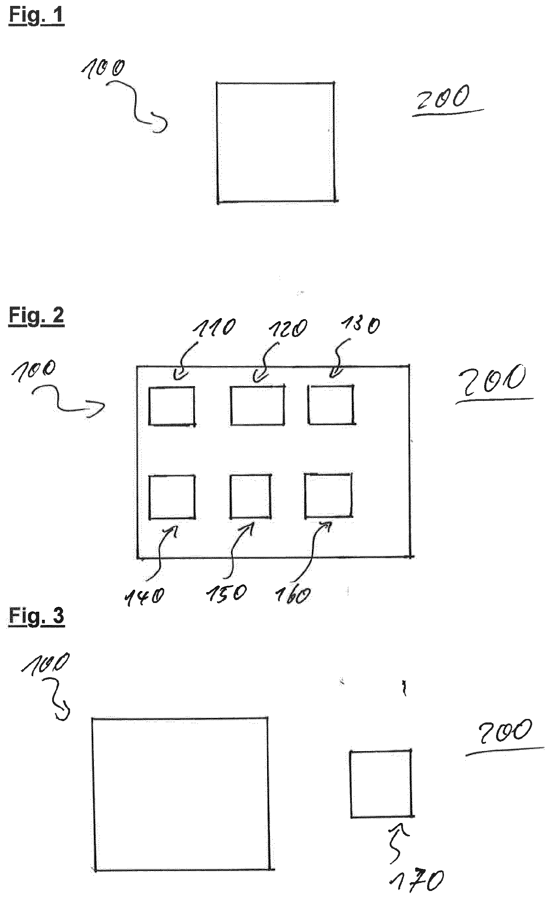

**Fig. 1** zeigt eine schematische Darstellung eines Stückguthandhabungssystems 100 nach einem Ausführungsbeispiel der vorliegenden Offenbarung sowie einen Handhabungsbereich 200 des Stückguthandhabungssystems 100. Das Stückguthandhabungssystem 100 kann sich in einer Werkshalle und/oder einem Logistikzentrum befinden, in welchem Stückgüter sortiert und weiterbewegt (d.h. gehandhabt) werden. Der Handhabungsbereich 200 umfasst den Bereich in welchem das Stückguthandhabungssystem 100 eingerichtet ist, ein Stückgut zu manipulieren.

**Fig. 2** zeigt eine schematische Darstellung eines Stückguthandhabungssystems nach einem Ausführungsbeispiel der vorliegenden Offenbarung. Das Stückguthandhabungssystem 100 umfasst einen steuerbaren Roboterarm 120, einen Sensor 130 zur Erfassung einer Umgebung um das Stückguthandhabungssystem 100, eine Steuereinheit 110, eine Bedieneinheit 140, eine Kommunikationsschnittstelle 150 und ein Fördermittel 160. Die Steuereinheit 110 ist mit der Bedieneinheit 140, dem Roboterarm 120, dem Sensor 130 und/oder der Kommunikationsschnittstelle 150 zum Signalaustausch verbunden. Der Roboterarm 120 ist eingerichtet, sich drei unterschiedliche Raumrichtungen zu bewegen. Der Roboterarm 120 ist eingerichtet, ein Stückgut in der Umgebung des Stückguthandhabungssystem zu manipulieren. Das Manipulieren eines Stückgutes umfasst ein Verändern der Position eines Stückgutes und/oder eine Änderung einer Bewegungstrajektorie eines Stückgutes.

Die Kommunikationsschnittstelle 150 ist eingerichtet, eine Verbindung zwischen der Steuereinheit 110 und einer internen oder externen Recheneinheit zu ermöglichen. Die externe Recheneinheit ist dabei außerhalb des Stückguthandhabungssystems angeordnet. Die Kommunikationsschnittstelle 150 ist eingerichtet, kabellos eine Verbindung zum Signalaustausch mit der externen Recheneinheit einzugehen. Der Sensor 130 des Stückguthandhabungssystems 100 umfasst eine Kamera, einen schaltbasierten Sensor, insbesondere einen Ultraschallsensor und eine Lichtschranke. Die Kamera ist eingerichtet, im sichtbaren Licht, und im Infrarotbereich und im nahen Infrarotbereich, zu arbeiten. Die Kamera weist eine Fischaugenlinse auf. Die Steuereinheit 110 ist eingerichtet, mittels der Kommunikationsschnittstelle mit der externen Recheneinheit im Signalaustausch zu stehen und auf die Referenzdatenbank zuzugreifen.

**Fig. 3** zeigt eine schematische Darstellung eines Stückguthandhabungssystems 100 nach einem Ausführungsbeispiel der vorliegenden Offenbarung, mit einem Zwischenspeicher 170 in einem Handhabungsbereich 200 des Stückguthandhabungssystems 100 auf.

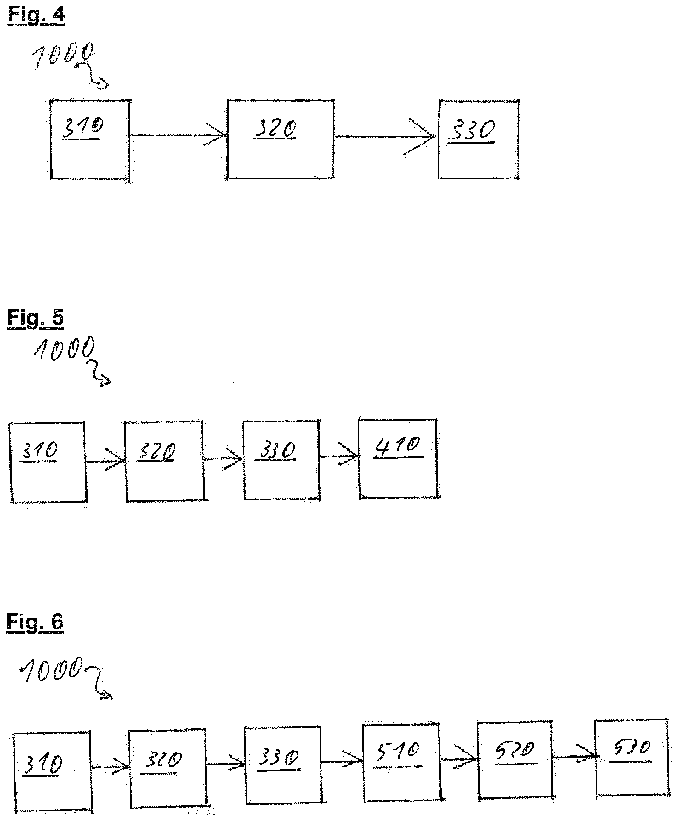

**Fig. 4** zeigt ein schematisches Ablaufdiagramm des Verfahrens 1000 zur Bestimmung eines Zustandes eines Stückguthandhabungssystems 100 nach einem ersten Ausführungsbeispiel der vorliegenden Offenbarung. Das Verfahren 1000 umfasst in einem ersten Schritt, ein Verfassen und/oder Bestimmen 310 von Bildinformationen eines Handhabungsbereich 200 des Stückguthandhabungssystems 100. Das Verfahren umfasst in einem zweiten Schritt 320 ein Empfangen und/oder Abbuchen von Referenzbildinformationen aus einer Referenzdatenbank. Das Verfahren 1000 umfasst in einem dritten Schritt das Ermitteln 330 eines Zustandswerts basierend auf den Bildinformationen und den Referenzbildinformationen. Der zweite Schritt 320 erfolgt nach dem ersten Schritt 310. Der dritte Schritt 330 erfolgt nach dem zweiten Schritt 320.

Die Bildinformationen umfassen Stückgutinformationen, welche Informationen über ein Stückgut aufweisen. Ein Stückgut ist ein Objekt, das von einem Stückguthandhabungssystem 100 als handzuhabenden Objekts anzusehen ist. Die Bildinformationen umfassen Fremdobjektinformationen, welche Informationen über ein Fremdenobjekt aufweisen. Ein Fremdobjekt ist ein Objekt, welches Stückgut ist. Ein Fremdobjekt ist ein Objekt, welches von einem Stückguthandhabungssystem 100 als ein Objekt anzusehen ist, welches in dem Handhabungsbereich 200 liegt. Die Referenzbildinformationen weisen Referenzinformationen über ein Stückgut auf. Die Referenzbildinformationen weisen Referenzinformationen über ein Fremdobjekt auf.

Beim Bestimmen der Bildinformationen, bleibt ein Teil des Bildes und/oder ein Teil einer Bildserie berücksichtigt. Das Bestimmen der Bildinformationen basiert auf Sensordaten des Sensors 130 des Stückguthandhabungssystems 100. Das Bestimmen der Bildinformationen umfasst ein Auswählen eines Bereichs von Interesse. Der Bereich von Interesse umfasst ein Stückgut. Der Bereich von Interesse umfasst einen Abschnitt des Fördermittels. Der Bereich von Interesse umfasst einen Zwischenspeicher. Das Fördermittel ist eingerichtet, das Stückgut zu befördern. Das Fördermittel weist insbesondere ein Förderrutsche auf.

Die Bildinformationen weisen eine Bildserie auf. Die Bildserie umfasst ein erstes Bild, welches zu einem ersten Zeitpunkt aufgenommen wurde, und ein zweites Bild, welches zu einem zum ersten Zeitpunkt unterschiedlichen zweiten Zeitpunkt aufgenommen wurde.

Das Bestimmen 310 der Bildinformationen umfasst, eine Bestimmung eines Bewegungsvektors eines Stückgutes. Der Bewegungsvektor wird basierend auf dem ersten Bild und dem zweiten Bild ermittelt. Beim Ermitteln 330 des Zustandswerts bleibt ein Teil des Bildes und/oder ein Teil der Bildserie unberücksichtigt. Beim Bestimmen 310 der Bildinformationen wird eine Position eines Stückgutes ermittelt. Beim Ermitteln 330 des Zustandswerts wird die Position eines Stückgutes berücksichtigt. Beim Bestimmen 310 der Bildinformationen wird eine Position eines Fremdobjektes ermittelt. Beim Ermitteln 330 des Zustandswerts wird die Position eines Fremdobjekts berücksichtigt. Beim Bestimmen 310 der Bildinformationen wird ein Abstand eines Fremdobjektes zu einem Stückgut ermittelt. Beim Bestimmen 310 der Bildinformationen wird ein Abstand eines Fremdobjektes zu dem Stückguthandhabungssystem ermittelt. Beim Ermitteln 330 des Zustandswerts wird der Abstand eines Fremdobjektes zu dem Stückguthandhabungssystem berücksichtigt. Beim Bestimmen 310 der Bildinformationen wird ein Abstand eines Stückgutes zum Stückguthandhabungssystem ermittelt. Beim Ermitteln 330 des Zustandes wird der Abstand eines Stückgutes zum Stückguthandhabungssystem 100 berücksichtigt.

Der Zustandswert ist ein Wahrscheinlichkeitswert. Der Wahrscheinlichkeitswert ist indikativ für eine Wahrscheinlichkeit mit welcher es durch ein Fremdobjekt zu einer Störung im Ablauf eines Betriebs des Stückguthandhabungssystems 100 kommen kann. Unter einer Störung wird ein Hindernis verstanden, dass ein Ablauf des Betriebs des Stückguthandhabungssystems 100 behindert. Die Störung durch ein Fremdobjekt umfasst ein Verursachen eines Staus von Stückgütern durch ein Fremdobjekt.

Der Zustandswert ist ein Wahrscheinlichkeitswert. Der Wahrscheinlichkeitswert ist indikativ für die Wahrscheinlichkeit, mit welcher es durch ein Fremdobjekt zu einer Störung im Ablauf eines Betriebs des Stückguthandhabungssystems 100 kommen kann.

Unter einer Störung wird ein Hindernis oder Ereignis verstanden, das ein Ablauf des Betriebs des Stückguthandhabungssystems 100 behindert. Die Störung durch ein Fremdobjekt umfasst ein Verursachen eines Staus von Stückgütern durch ein Fremdobjekt. Die Störung durch ein Fremdobjekt umfasst ein Senkrechtstellen eines Stückgutes durch ein Fremdobjekt. Die Störung umfasst eine Beschädigung von Stückgütern durch ein Fremdobjekt. Die Störung umfasst ein Doppel- und Mehrfachbepacken von Stückgütern durch ein Fremdobjekt. Die Störung umfasst ein Fallen der Stückstückgüter durch ein Fremdobjekt. Die Störung umfasst ein Steckenbleiben des Stückguts durch ein Fremdobjekt. Die Störung umfasst das Verschütten von Flüssigkeiten auf dem Stückguthandhabungssystem 100 durch ein Fremdobjekt. Die Störung umfasst eine Behinderung einer Bewegung des Stückguthandhabungssystems durch ein Fremdobjekt. Die Störung umfasst eine Beeinträchtigung des Handhabungsbereichs 200, insbesondere eines Abschnitts des Sichtfeldes, in welchem sich ein Stückgut befindet, eines Sensors 130, durch ein Fremdobjekt.

Der Zustandswert kann einen erste Zustandsausprägung, eine zweite Zustandsausprägung und eine dritte Zustandsausprägung annehmen. Beim Ermitteln 330 des Zustandswerts wird nur ein Bereich von Interesse in den Referenzbildinformationen und ein Bereich von Interesse in den Bildinformationen berücksichtigt. Die Referenzbildinformationen umfassen eine erste Referenzklasse, eine zweite Referenzklasse und eine dritte Referenzklasse. Beim Ermitteln des Zustandswerts werden die erste Referenzklasse, die zweite Referenzklasse und die dritte Referenzklasse berücksichtigt. Beim Ermitteln 330 des Zustandswerts, wird ermittelt, in welchem Verhältnis die Bildinformationen in der ersten Referenzklasse, in der zweiten Referenzklasse und in der dritten Referenzklasse liegen. Die Ermittlung 330 des Zustandswerts erfolgt in Abhängigkeit von der Verteilung der Bildinformationen in der ersten Referenzklasse, in der zweiten Referenzklasse und in der dritten Referenzklasse. Die Referenzbildinformationen umfassen eine Bewertung der ersten Referenzklasse, der zweiten Referenzklasse und der dritten Referenzklasse. Beim Ermitteln 330 des Zustandswerts wird die Bewertung der ersten Referenzklasse, der zweiten Referenzklasse und der dritten Referenzklasse berücksichtigt. Die Ermittlung 330 des Zustandswerts erfolgt mittels eines lernenden Algorithmus.

**Fig. 5** zeigt ein schematisches Ablaufdiagramm mittels eines Verfahrens 1000 nach einem Ausführungsbeispiel der vorliegenden Offenbarung. Das Verfahren gemäß dem Ausführungsbeispiel weist ähnliche Merkmale, wie das Verfahren aus dem vorhergehenden Ausführungsbeispiel auf. Das Verfahren 1000 umfasst in einem vierten Schritt 410 ein Ansteuern des Stückguthandhabungssystems 100 in Abhängigkeit vom Zustandswert. Der vierte Schritt 410 erfolgt nach dem dritten Schritt 330.

**Fig. 6** zeigt ein schematisches Ablaufdiagramm eines Verfahrens 1000 gemäß einem Ausführungsbeispiel der vorliegenden Offenbarung. Das Verfahren 1000 nach dem Ausführungsbeispiel weist ähnliche Merkmale wie das Verfahren nach dem in Zusammenhang mit Fig. 4 oder 5 erläuterten Ausführungsbeispielen auf.

Das Verfahren umfasst in einem fünften Schritt 510 ein Ausgeben des Zustandswerts an eine Bedieneinheit 140 und an eine Kommunikationsschnittstelle 150. Das Verfahren umfasst in einem sechsten Schritt 520 ein Empfangen und/oder Abrufen einer Bewertung durch einen Nutzer über die Bedieneinheit und/oder die Kommunikationsschnittstelle 150. Das Verfahren umfasst in einem siebten Schritt ein Ausgeben 530 der Bildinformationen und der zugehörigen Bewertung der Referenzdatenbank. Die sechste Schritt 520 erfolgt auf den fünften Schritt 510. Der siebte Schritt 530 erfolgt auf den sechsten Schritt 520. Hierbei erfolgt die Ausgabe an den Nutzer visuell.

Wenn die erste Zustandsausprägung vorliegt bleibt ein bisheriger geplanter Bewegungsablauf des Stückguthandhabungssystems unbeeinflusst. Wenn die zweite Zustandsausprägung vorliegt, wird ein bisher geplanter Bewegungsablauf des Stückguthandhabungssystems 100 in geänderter Form umgesetzt. Liegt die dritte Zustandsausprägung vor, bleibt das Stückguthandhabungssystem 100, insbesondere unmittelbar, stehen.

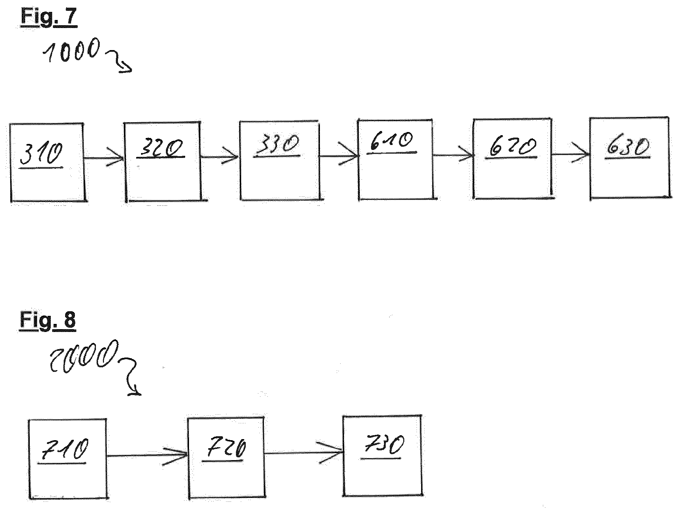

**Fig. 7** zeigt ein Ablaufdiagramm eines Verfahrens 1000 nach einem Ausführungsbeispiel der vorliegenden Offenbarung. Das Verfahren 1000 nach dem Ausführungsbeispiel weist ähnliche Merkmale, wie das Verfahren 1000 nach einem der vorherigen Ausführungsbeispiele auf. Das Verfahren 1000 weist in einem achten Schritt 610 ein Ausgeben einer Ware an den Nutzer über die Bedienungseinheit und/oder die Kommunikationsschnittstelle, wenn ein Stückguthandhabungssystem 100 stehen bleibt, auf. Das Verfahren 1000 weist in einem neunten Schritt 620 ein Empfangen einer Freigabe durch den Nutzer über die Bedienungseinheit und über die Kommunikationsschnittstelle auf. Das Verfahren umfasst in einem zehnten Schritt 630 ein Wiederaufnehmen der regulären Tätigkeit des Stückguthandhabungssystems 100 bei vorliegender Freigabe durch den Nutzer. Der neunte Schritt 620 folgt zeitlich auf den achten Schritt 610. Der zehnte Schritt 630 folgt zeitlich auf den neunten Schritt 620.

**Fig. 8** zeigt ein schematisches Ablaufdiagramm eines Verfahrens 2000 zum Trainieren oder Umtrainieren eines lernenden Algorithmus zur Ermittlung eines Zustands des Stückguthandhabungssystems 100 für Stückgüter. Das Verfahren 2000 zum Trainieren oder Umtrainieren eines lernenden Algorithmus zur Ermittlung eines Zustands eines Stückguthandhabungssystems 100 umfasst einen elften Schritt 710, einen zwölften Schritt 720 und einen dreizehnten Schritt 730. Der elfte Schritt 710 weist das Empfangen von Eingangstrainingsdaten, nämlich bewerteten Bildern des Stückguthandhabungssystems 100 während einer Zeitspanne auf, wobei die Bilder in absteigender Zeitfolge, aufeinanderfolgend bereitgestellt werden. Der zwölfte Schritt 720 umfasst das Empfangen von Ausgangstrainingsdaten, nämlich einen Zustandswert des Stückguthandhabungssystems 100 für Stückgüter während der Zeitspanne. Der dreizehnte Schritt 730 umfasst das Trainieren oder Umtrainieren des lernenden Algorithmus basierend auf den Eingangsdaten und den Ausgangstrainingsdaten. Der zwölfte Schritt 720 folgt zeitlich auf den einen elften Schritt 710. Der dreizehnte Schritt 730 folgt zeitlich auf den zwölften Schritt 720.

### Bezugszeichenliste:

- 100: Stückguthandhabungssystem
- 110: Steuereinheit
- 120: Roboterarm
- 130: Sensor
- 140: Bedieneinheit
- 150: Kommunikationsschnittstelle
- 160: Fördermittel
- 170: Zwischenspeicher
- 200: Handhabungsbereich
- 310: erster Schritt
- 320: zweiter Schritt
- 330: dritter Schritt
- 410: vierter Schritt
- 510: fünfter Schritt
- 520: sechster Schritt
- 530: siebter Schritt
- 610: achter Schritt
- 620: neunter Schritt
- 630: zehnter Schritt
- 710: elfter Schritt
- 720: zwölfter Schritt
- 730: dreizehnter Schritt
- 1000: Verfahren

## Patentansprüche

1. Verfahren (1000) zur Bestimmung eines Zustands eines Stückguthandhabungssystems (100), umfassend:
Erfassen oder Bestimmen (310) von Bildinformationen eines Handhabungsbereichs (200) des Stückguthandhabungssystems (100),
Abrufen (320) von Referenzbildinformationen aus einer Referenzdatenbank, und
Ermitteln (330) eines Zustandswerts basierend auf den Bildinformationen und den Referenzbildinformationen.

2. Verfahren (1000) nach Anspruch 1, wobei das Ermitteln ein Vergleichen von Merkmalen aus den Bildinformationen und den Referenzbildinformationen umfasst.

3. Verfahren (1000) nach einem der vorhergehenden Ansprüche, wobei die Referenzdatenbank reduzierte Referenzbildinformationen umfasst.

4. Verfahren (1000) nach einem der vorhergehenden Ansprüche, wobei das Ermitteln (330) des Zustandswerts ein Abgleichen zwischen Bildinformationen und Referenzbildinformationen umfasst, um einen Grad einer Abweichung von Bildinformationen zu Referenzbildinformationen zu bestimmen und basierend darauf den Zustandswert zu ermitteln.

5. Verfahren (1000) nach einem der vorhergehenden Ansprüche, wobei das Ermitteln (330) des Zustandswerts durch einen lernende Algorithmus durchgeführt wird.

6. Verfahren (1000) nach einem der vorhergehenden Ansprüche, wobei das Stückguthandhabungssystem (100) basierend auf den Bildinformationen gesteuert wird.

7. Verfahren (1000) nach einem der vorhergehenden Ansprüche, wobei die Bildinformationen aus einem Rohbilddatenstrom generiert werden, wobei für die Bildinformationen nur jedes n-te Bild verwendet wird.

8. Verfahren (1000) nach einem der vorhergehenden Ansprüche,
wobei die Bildinformationen eine Bilderserie aufweisen,
wobei die Bilderserie ein erstes Bild, welches zu einem ersten Zeitpunkt aufgenommen wurde, und ein zweites Bild, welches zu einem zum ersten Zeitpunkt unterschiedlichen zweiten Zeitpunkt aufgenommen wurde, umfasst,
wobei das Bestimmen (310) der Bildinformationen, eine Bestimmung eines Bewegungsvektors eines Stückgutes umfasst, und
wobei bei der Ermittlung des Zustandswerts der Bewegungsvektor eines Stückgutes berücksichtigt wird.

9. Verfahren (1000) nach einem der vorhergehenden Ansprüche, wobei bei dem Ermitteln (330) des Zustandswertes ein Teil des Bildes und/oder ein Teil der Bilderserie unberücksichtigt bleibt.

10. Verfahren (1000) nach einem der vorhergehenden Ansprüche, wobei der Zustandswert ein Wahrscheinlichkeitswert ist, und wobei der Wahrscheinlichkeitswert indikativ für eine Wahrscheinlichkeit ist, mit welcher es zu einer Störung im Ablauf eines Betriebs der Stückguthandhabungssystems (100) kommen kann.

11. Verfahren (1000) nach einem der vorhergehenden Ansprüche,
wobei die Referenzbildinformationen eine erste Referenzklasse, eine zweite Referenzklasse und eine dritte Referenzklasse umfassen, und/oder bei der Ermittlung des Zustandswertes der erste Referenzklasse, der zweite Referenzklasse und der dritte Referenzklasse basierend auf den Referenzbildinformationen ermittelt werden, und
wobei beim Ermitteln des Zustandswerts der erste Referenzklasse, der zweite Referenzklasse und der dritte Referenzklasse berücksichtigt werden.

12. Verfahren (1000) nach einem der vorhergehenden Ansprüche, wobei das Verfahren (1000) ferner umfasst:
Ausgeben (510) des Zustandswerts an eine Bedieneinheit (140) und/oder eine Kommunikationsschnittstelle (150),
Empfangen (520) und/oder Abrufen einer Bewertung durch einen Nutzer über die Bedieneinheit (140) und/oder die Kommunikationsschnittstelle (150), und
Ausgeben (530) der Bildinformationen und der zugehörigen Bewertung an die Referenzdatenbank.

13. Verfahren (1000) nach einem der vorhergehenden Ansprüche, wobei das Verfahren (1000) ferner umfasst:
Ausgeben (610) einer Warnung an den Nutzer über eine Bedienungseinheit und/oder die Kommunikationsschnittstelle (150), wenn das Stückguthandhabungssystem (100) einen Fehler während des Betriebs detektiert,
Empfangen (620) einer Freigabe durch den Nutzer über die Bedienungseinheit und/oder die Kommunikationsschnittstelle (150).

14. Computerprogramm, das Anweisungen umfasst, die, wenn das Programm von einer Recheneinheit ausgeführt wird, die Recheneinheit veranlasst, ein Verfahren (1000) gemäß eine der vorhergehenden Ansprüche auszuführen.

15. Zustandsbestimmungssystem zum Bestimmen eines Zustandes einer Stückguthandhabungssystems (100) zum Handhaben von Poststücken, umfassend: eine Steuereinheit (110), die dazu ausgestaltet ist, ein Verfahren (1000) gemäß einem der vorhergehenden Ansprüche 1 bis 13.
